(19) Europäisches Patentamt
European Patent Office
Office européen des brevets

(11) **EP 4 448 988 B1**

(12) **EUROPÄISCHE PATENTSCHRIFT**

(45) Veröffentlichungstag und Bekanntmachung des Hinweises auf die Patenterteilung:
**17.12.2025 Patentblatt 2025/51**

(21) Anmeldenummer: **22823558.6**

(22) Anmeldetag: **02.12.2022**

(51) Internationale Patentklassifikation (IPC):
*F16H 61/12* (2010.01)    *F16H 61/02* (2006.01)
*F15B 11/10* (2006.01)    *F15B 13/043* (2006.01)

(52) Gemeinsame Patentklassifikation (CPC):
**F15B 20/008; F15B 11/10; F16H 61/0267;**
**F16H 61/0276; F16H 61/12;** F15B 13/0433;
F15B 2211/3057; F15B 2211/365; F15B 2211/6653;
F15B 2211/8636; F15B 2211/8757;
F16H 2061/0279; F16H 2061/122; F16H 2061/1264

(86) Internationale Anmeldenummer:
**PCT/EP2022/084199**

(87) Internationale Veröffentlichungsnummer:
**WO 2023/110452 (22.06.2023 Gazette 2023/25)**

(54) **HYDRAULIKSYSTEM MIT WENIGSTENS ZWEI VORGESTEUERTEN DRUCKREGELVENTILEN**

HYDRAULIC SYSTEM WITH AT LEAST TWO PRESSURE-REGULATING PILOT VALVES

SYSTÈME HYDRAULIQUE COMPRENANT AU MOINS DEUX VANNES PILOTES DE RÉGULATION DE PRESSION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **15.12.2021  DE 102021214388**

(43) Veröffentlichungstag der Anmeldung:
**23.10.2024  Patentblatt 2024/43**

(73) Patentinhaber: **ZF Friedrichshafen AG**
**88046 Friedrichshafen (DE)**

(72) Erfinder: **NOVAK, Rainer**
**6900 Bregenz (AT)**

(74) Vertreter: **ZF Friedrichshafen AG**
**Gewerblicher Rechtsschutz**
**Löwentalerstraße 20**
**88046 Friedrichshafen (DE)**

(56) Entgegenhaltungen:
**US-A1- 2006 030 455    US-A1- 2020 361 448**

**Beschreibung**

Die Erfindung betrifft ein Hydrauliksystem mit wenigstens zwei vorgesteuerten Druckregelventilen gemäß der im Oberbegriff des Patentanspruches 1 näher definierten Art.

Zur Ansteuerung von Aktuatoren in Automatikgetrieben werden üblicherweise vorgesteuerte Regelventile verwendet. Dabei ist jeweils eine Vorsteuerstufe mindestens einem Ventil zugeordnet. Die meisten Ventile sind genau einer hydraulischen Schnittstelle zugeordnet, um diese mit Druck oder einem Volumenstrom zu versorgen.

Bei Anwendungen im Flugzeugbau oder im Industrieanlagenbau sind einer hydraulischen Schnittstelle mindestens zwei oder mehr Stell- oder Regelventile zugeordnet, um beim Ausfall eines einzigen Ventils zumindest eine eingeschränkte Betriebspunktführung aufrecht erhalten zu können.

Eine derartige Redundanzanforderung im Bereich von hydraulischen Stellsystemen ist künftig auch bei Fahrzeugen zu erwarten, die mit innovativen Fahrassistenzsystemen ausgeführt sind und mit denen ein automatisierter Fahrbetrieb realisierbar ist.

Problematisch dabei ist jedoch, dass bekannte redundante Systeme eine geringe Robustheit gegenüber Störungen aufweisen. Störungen treten im Betrieb unter anderem aufgrund von Verschmutzungen, Verklemmungen, Funktionsausfällen durch Vibrationen oder Veränderungen der Reibungswerte auf. Aufgrund der geringen Robustheit gegenüber derartigen Störungen verursachen bereits kleine Störungen bzw. Veränderungen von Betriebsparametern, wie die Verschmutzung des Mediums, Viskositätsänderungen, Kristallbildung von Öl-Additiven, Verschleiß an Aktuatorik- oder Ventilteilen und dergleichen, unerwünscht große Störungen der hydraulischen Funktion.

Aus dem Stand der Technik sind die Dokumente US 2006/030455 A1, sowie US 2020/361448A1 bekannt, welche Hydlauliksysteme mit vorgesteuerten Druckventilen offenbaren.

Der vorliegenden Erfindung liegt daher die Aufgabe zugrunde, ein Hydrauliksystem mit wenigstens zwei vorgesteuerten Druckregelventilen zur Verfügung zu stellen, die durch eine hohe Robustheit gegenüber Störungen gekennzeichnet ist.

Erfindungsgemäß wird diese Aufgabe mit einem Hydrauliksystem mit den Merkmalen des Patentanspruches 1 gelöst.

Das erfindungsgemäße Hydrauliksystem umfasst wenigstens zwei vorgesteuerte Druckregelventile in Parallelschaltung, über die ein Arbeitsdruck einstellbar ist. Die Druckregelventile weisen jeweils wenigstens einen Ventilschieber auf, die jeweils in Ventilgehäusen längsbeweglich geführt sind. Die Druckregelventile sind jeweils mit Hochdruck-Ventiltaschen, Arbeitsdruck-Ventiltaschen und Niederdruck-Ventiltaschen ausgeführt. Eine Hochdruck-Leitung ist mit den Hochdruck-Ventiltaschen, eine Arbeitsdruck-Leitung ist mit den Arbeitsdruck-Ventiltaschen und eine Niederdruck-Leitung ist jeweils mit den Niederdruck-Ventiltaschen der Druckregelventile verbunden.

Erfindungsgemäß sind die Druckregelventile mit unterschiedlichen Ventilüberdeckungen ausgeführt.

Die unterschiedliche Ventilüberdeckung der Druckregelventile führt in einem sogenannten Kleinsignalverhalten zu unterschiedlichen Ventilausschlägen bei Betriebspunktänderungen. Dabei wird vorliegend unter dem Begriff Ventilausschlag ein axialer Stellweg der Ventilschieber der Druckregelventile verstanden. Unter einem Kleinsignalverhalten werden beispielsweise Druckänderungen bzw. Betriebspunktänderungen unter 1 bar verstanden, wenn der Betriebsdruckbereich im Hydrauliksystem im Bereich der Druckregelventile zwischen 0,3 bis 20 bar liegt.

Eine Stellwegveränderung des bzw. der Ventilschieber bei konstantem Hochdruck bzw. Systemdruck entspricht dem Produkt aus der Ventilüberdeckung und dem Verhältnis zwischen einer Änderung des Arbeitsdruckes und dem Hochdruck. Aus dieser Abhängigkeit resultiert bei einer Kleinsignaländerung bzw. bei einer geringen Druckänderung des Arbeitsdruckes in einem Druckarbeitspunkt bei einem Druckregelventil, das beispielsweise eine doppelt so große Ventilüberdeckung wie das andere Druckregelventil der Parallelschaltung aufweist, ein doppelt so großer Ventilausschlag, um den neuen Betriebspunkt einzustellen. Liegen die typischen Toleranzgrenzen in einer Einzelauslegung eines Druckregelventils beispielsweise in einem Bereich von 0,2 bis 0,4 mm, so ist bei einer Parallelschaltung von zwei Druckregelventilen eines der beiden Ventile mit 0,1 bis etwa 0,3 mm und das andere auf 0,3 bis 0,5 mm zu tolerieren.

Dabei wird vorliegend unter dem Begriff Ventilüberdeckung eines Druckregelventiles jeweils der axiale Abstand zwischen Steuerkanten der Hochdruck-Ventiltasche und der Niederdruck-Ventiltasche abzüglich des axialen Abstandes zwischen Steuerkanten der Ventilschieber, die mit den Steuerkanten der Hochdruck-Ventiltasche und der Niederdruck-Ventiltasche zusammenwirken, verstanden.

Mit anderen Worten entspricht die Ventilüberdeckung eines Druckregelventils jeweils einem axialen Abstand zwischen Steuerkanten im Ventilgehäuse und Steuerkanten des darin längsbeweglich angeordneten Ventilschiebers. Die Steuerkanten des Ventilgehäuses stellen jeweils axiale Begrenzungen der Hochdruck-Ventiltasche und der Niederdruck-Ventiltasche dar, während die Steuerkanten des Ventilschiebers, die zusammen mit den Steuerkanten des Ventilgehäuses konstruktiv die Ventilüberdeckung definieren, jeweils mit der Hochdruck-Ventiltasche und der Niederdruck-Ventiltasche zur Einstellung des Arbeitsdruckes zusammenwirken.

Das Druckregelventil, das mit der größeren Überdeckung ausgeführt ist, liefert also ein anderes Kleinsignalverhalten, größere Stellausschläge und damit einen anderen Durchflussanteil in der Summendynamik der Parallelschaltung. Gleichzeitig verfügt das Druckregelventil mit der größeren Ventilüberdeckung, die bei dem betrachteten Beispiel doppelt so groß ist wie die Ventilüberdeckung des anderen Druckregelventils der Parallelschaltung, über eine geringere Ventilleckage. Dies resultiert aus der Tatsache, dass mit einer größeren Ventilüberdeckung auch eine höhere Dichtlänge zwischen der Hochdruck-Leitung und der Niederdruck-Leitung einhergeht.

In Betriebspunkten innerhalb der Ventilüberdeckung arbeiten Druckregelventile bekannterweise als sogenannte hydraulische Halbbrücken. Da aber zu einer Änderung des Arbeitsdruckes im aktuellen Arbeitspunkt eine Durchflussänderung ausgehend von der Hochdruck-Leitung in Richtung der Arbeitsdruck-Leitung notwendig ist, erzeugen die beiden mit unterschiedlicher Ventilüberdeckung ausgeführten Druckregelventile unterschiedliche Durchflussänderungen durch ihre Stellausschläge.

Das erfindungsgemäße Hydrauliksystem ist somit mit einer hohen Robustheit gegenüber Störungen ausgeführt und speziell für eine hydraulische Betätigung einer Aktuatorik sehr einfach und mit geringem Bauraumbedarf umsetzbar.

Bei einer bauraumgünstigen Ausführungsform des erfindungsgemäßen Hydrauliksystems sind die Arbeitsdruck-Ventiltaschen in axialer Richtung der Druckregelventile jeweils zwischen den Hochdruck-Ventiltaschen und den Niederdruck-Ventiltaschen vorgesehen.

Die Ventilschieber der Druckregelventile können mehrere Ventilschieber-Abschnitte mit unterschiedlichen Außendurchmessern aufweisen. Dabei besteht die Möglichkeit, dass jeweils ein Außendurchmesser eines Ventilschieber-Zwischenabschnittes, der in axialer Richtung zwischen zwei Ventilschieber-Außenabschnitten angeordnet ist, zumindest kleiner ist als der Außendurchmesser eines der Ventilschieber-Außenabschnitte.

Des Weiteren kann es vorgesehen sein, dass der Außendurchmesser eines der Ventilschieber-Außenabschnitte größer ist als der Außendurchmesser des anderen Ventilschieber-Außenabschnittes von zumindest einem der Ventilschieber der Druckregelventile. An der Differenzfläche zwischen einander zugewandten Steuerflächen eines der Ventilschieber, die jeweils von den Außendurchmessern der Ventilschieber-Außenabschnitte und dem Außendurchmesser des Ventilschieber-Zwischenabschnittes begrenzt sind, kann der Druck in der Arbeitsdruck-Leitung anliegen und am Ventilschieber in eine Stellrichtung des Ventilschiebers angreifen, die eine Reduzierung eines Volumenstromes ausgehend von der Hochdruck-Ventiltasche in Richtung der Arbeitsdruck-Ventiltasche und eine Erhöhung des Volumenstromes ausgehend von der Arbeitsdruck-Ventiltasche in Richtung der Niederdruck-Ventiltasche bewirkt.

Dann ist die Regelfunktion des Druckregelventiles auf konstruktiv einfache Art und Weise umgesetzt.

Zudem besteht die Möglichkeit, dass an einer Steuerfläche eines der Ventilschieber, die vom Außendurchmesser des Ventilschieber-Abschnittes, dessen Außendurchmesser größer ist als der Außendurchmesser eines anderen Ventilschieber-Abschnittes, und dem Außendurchmesser des anderen Ventilschieber-Abschnittes begrenzt ist, der Druck in der Arbeitsdruck-Leitung anliegt und am Ventilschieber in eine Stellrichtung des Ventilschiebers angreift. Wenn die Stellrichtung des Ventilschiebers eine Reduzierung eines Volumenstromes ausgehend von der Hochdruck-Ventiltasche in Richtung der Arbeitsdruck-Ventiltasche und eine Erhöhung des Volumenstromes ausgehen von der Arbeitsdruck-Ventiltasche in Richtung der Niederdruck-Ventiltasche bewirkt, ist wiederum die Regelfunktion des Druckregelventiles auf einfache Art und Weise realisiert.

Über Vorsteuerdruck-Ventiltaschen der Druckregelventile kann jeweils ein Vorsteuerdruck im Bereich von Steuerflächen der Ventilschieber der Druckregelventile anlegbar sein, der an den Ventilschiebern jeweils in Stellrichtungen der Ventilschieber angreift. Wird durch Stellbewegungen der Ventilschieber in diese Stellrichtungen jeweils eine Erhöhung des Volumenstromes ausgehend von den Hochdruck-Ventiltaschen in Richtung der Arbeitsdruck-Ventiltaschen und eine Reduzierung der Volumenströme ausgehend von den Arbeitsdruck-Ventiltaschen in Richtung der Niederdruck-Ventiltaschen bewirkt, sind die Druckregelventile mit geringem Aufwand vorsteuerbar.

Die Druckregelventile können jeweils eine Federeinheit umfassen, deren Federkräfte jeweils an den Ventilschiebern in Stellrichtungen der Ventilschieber angreifen, die eine Reduzierung von Volumenströmen ausgehend von den Arbeitsdruck-Ventiltaschen in Richtung der Niederdruck-Ventiltaschen bewirken. Dadurch ist gewährleistet, dass die Druckregelventile in drucklosem Zustand bzw. unterhalb eines definierten Druckniveaus des Druckes in der Hochdruck-Leitung in eine vordefinierte Stellung bzw. in einen vordefinierten Betriebszustand übergehen. Dann sind die Druckregelventile jeweils ausgehend von einem definierten Betriebszustand in gewünschtem Umfang betätigbar.

Die Arbeitsdruck-Ventiltaschen der Druckregelventile können in den Ventilgehäusen ausgeführt sein und jeweils Innendurchmesser aufweisen, die größer sind als die Außendurchmesser der Ventilschieber.

Zusätzlich besteht die Möglichkeit, dass die Hochdruck-Ventiltasche und die Niederdruck-Ventiltasche von zumindest einem der beiden Druckregelventile im Ventilgehäuse des Druckregelventils vorgesehen sind, deren Innendurchmesser jeweils größer als die Außendurchmesser des Ventilschiebers sind.

Die Niederdruck-Ventiltasche und die Hochdruck-Ventiltasche können aber auch jeweils durch Ventilschieber-Taschenabschnitte gebildet sein, deren Außendurchmesser jeweils kleiner als Innendurchmesser von axialen Ventilgehäuse-Führungsabschnitten sind, in deren Bereichen der Ventilschieber über Ventilschieber-Führungsabschnitte längsbeweglich geführt ist. Die Außendurchmesser der Ventilschieber-Führungsabschnitte sind jeweils größer als die Außendurchmesser der Ventilschieber-Taschenabschnitte und entsprechen wenigstens annähernd Innendurchmessern der Ventilgehäuse-Führungsabschnitte. Bei einer solchen Ausführung eines Druckregelventiles wirkt im Betrieb des Druckregelventiles im Wesentlichen keine Querkraft auf dessen Ventilschieber.

Die vorliegenden Druckregelventile und deren Ventilschieber stellen jeweils mechanischen Regler dar, die mit einer Hochdruck-Leitung, mit einer Arbeitsdruck-Leitung, mit einer Niederdruck-Leitung bzw. einer Tankdruckleitung und vorzugsweise mit einer Vorsteuerdruck-Leitung in Verbindung stehen.

Über Arbeitsdruck-Leitungen werden üblicherweise kapazitive hydraulische Lasten, wie Kupplungen oder Bremsen mit Hydraulikfluid versorgt. Stationär betrachtet arbeitet die Parallelschaltung der Druckregelventile des erfindungsgemäßen Hydrauliksystems als hydraulische Verstärkerschaltung. Der am Vorsteuerdruckanschluss anliegende Vorsteuerdruck einer Vorsteuerstufe wird durch das Kräftegleichgewicht am Ventilschieber in ein höheres Druckniveau in der Arbeitsdruck-Leitung verstärkt. Die Verstärkung ist dabei durch die Ventilgeometrie der Druckregelventile vorgegeben, wobei die Verstärkung jeweils mittels eines Durchmessersprungs im Bereich des Ventilschiebers zwischen der Arbeitsdruck-Ventiltasche und der Hochdruck-Ventiltasche konstruktiv umgesetzt ist.

Zusätzlich sind die Positionen der Ventilschieber der Druckregelventile bei stationärer Betrachtung in Abhängigkeit der hydraulischen Randbedingungen an den jeweiligen Anschlüssen abschätzbar.

Grundsätzlich liegt der vorliegenden Erfindung die Kenntnis zugrunde, dass das unterschiedliche Kleinsignalverhalten sich insbesondere bei Schmutz- oder Lufteinträgen in das Hydraulikfluid zeigt. Ventilschieber von Druckregelventilen, die nur geringe Stellbewegungen ausführen, setzen sich gerne mit Feinstpartikeln zu. Dieses Phänomen wird auch als Silting bezeichnet. Im Unterschied dazu reißen sich sogenannte nervös abgestimmte Ventilschieber, die im Betrieb ständig hohe Stellbewegungen ausführen, durch ihre Bewegungsenergie häufiger frei und zeigen andere Haft-, Gleit- und Reibungsparameter.

In Summe lässt sich durch die unterschiedliche Kleinsignaldynamik der beiden Druckregelventile, insbesondere bei gleichen stationären Eigenschaften, d. h. bei gleicher Ventilverstärkung, eine optimale Abstimmung für eine möglichst breite Partikelgrößenverteilung von Schmutzpartikeln erreichen.

Klemmt ein Ventilschieber eines der Druckregelventile, kann das andere Druckregelventil einen Großteil der Funktionsanforderungen an das Hydrauliksystem nach wie vor erfüllen. Dies ist bei Druckanforderungen und kapazitiver Last sogar bis zu 100% möglich, da das Druckniveau auch nur mit einem Druckregelventil eingestellt werden kann.

Klemmt eines der beiden Druckregelventile auf Zulauf, dann liegt ein sogenannter hydraulischer Kurzschluss zwischen der Hochdruck-Leitung und der Arbeitsdruck-Leitung des betreffenden Druckregelventils vor. Dann stellt sich das andere Druckregelventil durch seine Regelfunktion automatisch auf den Tankanschluss bzw. die mit der Niederdruckleitung verbundene Niederdruck-Ventiltasche, wodurch zumindest noch eine deutliche Druckreduzierung erreicht werden kann. Diese Druckreduzierung variiert je nach Arbeitspunkt. Bei typischen Spangrößen, wie sie gelegentlich bei Ausfällen gefunden werden, ist anzunehmen, dass zumindest noch das typische Touchpoint-Druckniveau unterschritten wird. Das Touchpoint-Druckniveau entspricht im Wesentlichen dem hydraulisch-mechanischen Nullpunkt der Übertragungsfähigkeit eines anliegenden Drehmomentes eines reibschlüssigen Schaltelementes, wie einer Kupplung oder einer Bremse.

Die Erfindung ist nicht auf die angegebene Kombination der Merkmale des unabhängigen Anspruches oder der hiervon abhängigen Ansprüche beschränkt. Es ergeben sich darüber hinaus Möglichkeiten, einzelne Merkmale auch soweit sie aus den Ansprüchen, der nachfolgenden Beschreibung von Ausführungsformen oder unmittelbar aus der Zeichnung hervorgehen, miteinander zu kombinieren. Die Bezugnahme der Ansprüche auf die Zeichnungen durch Verwendung von Bezugszeichen soll den Schutzumfang der Ansprüche nicht beschränken.

Bevorzugte Weiterbildungen ergeben sich aus den Unteransprüchen und der nachfolgenden Beschreibung. Ausführungsbeispiele der Erfindung werden, ohne hierauf beschränkt zu sein, anhand der Zeichnung näher erläutert.

Dabei zeigt:

Fig. 1    einen vereinfachten Schaltplan einer Parallelschaltung von zwei vorgesteuerten Druckregelventilen mit unterschiedlicher Ventilüberdeckung; und

Fig. 2    eine Fig. 1 entsprechende Darstellung einer weiteren Ausführungsform einer Parallelschaltung von zwei vorgesteuerten Druckregelventilen mit unterschiedlicher Ventilüberdeckung.

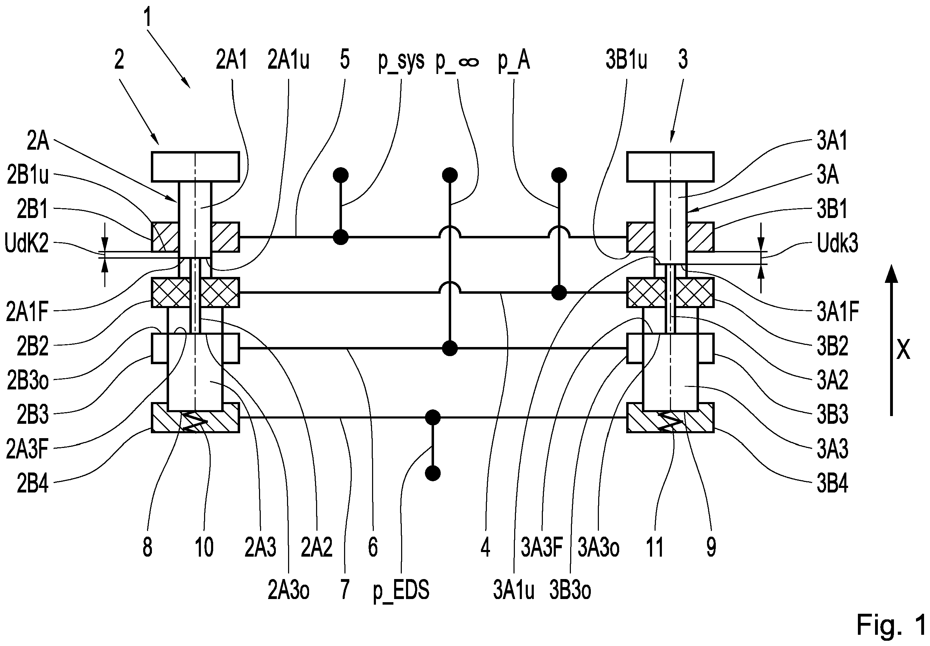

Fig. 1 zeigt einen Teil eines Schaltplans eines Hydrauliksystems 1, das eine Parallelschaltung von zwei vorgesteuerten Druckregelventilen 2, 3 mit unterschiedlicher Ventilüberdeckung Udk2, Udk3 umfasst. Die Druckregelventile 2, 3 sind zur Einstellung eines Arbeitsdruckes p_A vorgesehen, der in einer Arbeitsdruck-Leitung 4 vorliegt.

Die Arbeitsdruck-Leitung 4 zweigt von den Druckregelventile 2, 3 in Richtung einer Aktuatorik eines nicht näher dargestellten Automatikgetriebes ab. Die Aktuatorik kann eine Kupplung, eine Bremse, einen Parksperrenzylinder oder dergleichen umfassen. Die Druckregelventile 2, 3 weisen jeweils einen Ventilschieber 2A, 3A auf, die jeweils in Ventilgehäusen 2B, 3B längsbeweglich geführt sind.

Das Hydrauliksystem 1 ist zudem mit einer Hochdruck-Leitung 5 ausgeführt, die eine sogenannte Versorgungsdruckleitung darstellt und in der ein sogenannter Systemdruck p_sys anliegt. Zusätzlich umfasst das Hydrauliksystem 1 eine Niederdruck-Leitung 6, die auch als Tankdruckleitung bezeichnet wird und in der im Wesentlichen der Umgebungsdruck bzw. der atmosphärische Umgebungsdruck p_∞ vorliegt.

Die Hochdruck-Leitung 5 ist jeweils mit Hochdruck-Ventiltaschen 2B1 bzw. 3B1 der Druckregelventile 2, 3 verbunden, während die Arbeitsdruck-Leitung 4 mit sogenannten Arbeitsdruck-Ventiltaschen 2B2 bzw. 3B2 der Druckregelventile 2, 3 gekoppelt ist. Die Niederdruck-Leitung 6 zweigt von sogenannten Niederdruck-Ventiltaschen 2B3 bzw. 3B3 der Druckregelventile 2, 3 in Richtung eines nicht näher dargestellten Hydraulikfluidreservoirs bzw. eines Ölsumpfes des Automatikgetriebes ab. Die Arbeitsdruck-Ventiltaschen 2B2, 3B2 der Druckregelventile 2, 3 sind vorliegend in axialer Richtung X zwischen den Hochdruck-Ventiltaschen 2B1, 3B1 und den Niederdruck-Ventiltaschen 2B3 , 3B3 der Druckregelventile 2, 3 angeordnet.

Zur Vorsteuerung umfassen die Druckregelventile 2, 3 jeweils eine Vorsteuerdruck-Ventiltasche 2B4 bzw. 3B4, an den jeweils eine Vorsteuerdruck-Leitung 7 anliegt. Über die Vorsteuerdruck-Leitung 7 ist an Steuerflächen 8 bzw. 9 der Ventilschieber 2A bzw. 3A unmittelbar ein Vorsteuerdruck p_EDS anlegbar, der im Bereich eines nicht näher dargestellten elektrohydraulischen Druckstellers einstellbar ist.

Des Weiteren umfassen die Druckregelventile 2, 3 jeweils eine Federeinheit 10, 11, deren Federkräfte jeweils an den Ventilschiebern 2A, 3A in Stellrichtungen der Ventilschieber 2A, 3A angreifen, die eine Reduzierung von Volumenströmen ausgehend von den Arbeitsdruck-Ventiltaschen 2B2, 3B2 in Richtung der Niederdruck-Ventiltaschen 2B3, 3B3 bewirken.

Die Ventilschieber 2A, 3A der Druckregelventile 2, 3 sind jeweils mit drei Ventilschieber-Abschnitten 2A1 bis 2A3 bzw. 3A1 bis 3A3 ausgeführt. Dabei stellen die Ventilschieber-Abschnitte 2A1 und 2A3 bzw. 2B1 und 2B3 jeweils sogenannte Ventilschieber-Außenabschnitte der Ventilschieber 2A, 3A dar. Zwischen den Ventilschieber-Außenabschnitten 2A1 und 2A3 bzw. 3A1 und 3A3 sind in axialer Richtung X der Ventilschieber 2A bzw. 3A jeweils die Ventilschieber-Abschnitte 2A2 bzw. 3A2 vorgesehen, die nachfolgend auch als Ventilschieber-Zwischenabschnitte bezeichnet werden. Außendurchmesser der Ventilschieber-Zwischenabschnitte 2A2 bzw. 3A2 sind kleiner als die Außendurchmesser der Ventilschieber-Außenabschnitte 2A1, 2A3 bzw. 3A1, 3A3. Zusätzlich sind die Außendurchmesser der Ventilschieber-Außenabschnitte 2A3 bzw. 3A3 größer als die Außendurchmesser der Ventilschieber-Außenabschnitte 2A1 bzw. 3A1.

Die Ventilüberdeckung Udk2 des Druckregelventils 2 ist kleiner als die Ventilüberdeckung Udk3 des Druckregelventils 3. Dabei entsprechen die Ventilüberdeckungen Udk2, Udk3 der Druckregelventile 2, 3 jeweils einem axialen Abstand zwischen einer in axialer Richtung X unteren Steuerkante 2B1u bzw. 3B1u der Hochdruck-Ventiltasche 2B1 bzw. 3B1 und einer unteren Steuerkante 2A1u bzw. 3A1u des Ventilschieber-Außenabschnittes 2A1 bzw. 3A1 des Ventilschiebers 2A bzw. 3A des Druckregelventils 2 bzw. 3, wenn der Ventilschieber 2A bzw. 3A sich in einer axialen Ventilschieberstellung befindet, in der eine obere Steuerkante 2A3o bzw. 3A3o des Ventilschieber-Außenabschnittes 2A3 bzw. 3A3 des Ventilschiebers 2A bzw. 3A des Druckregelventils 2 bzw. 3 bündig mit einer oberen Steuerkante 2B3o bzw. 3B3o der Niederdruck-Ventiltasche 2B3 bzw. 3B3 abschließt. Vorliegend ist die Ventilüberdeckung Udk3 des Druckregelventils 3 doppelt so groß wie die Ventilüberdeckung Udk2 des Druckregelventiles 2.

Die Druckregelventile 2 ,3 stellen jeweils mechanische Regler dar, die in Abhängigkeit des Systemdrucks p_sys, des Umgebungsdruckes p_∞ und des Vorsteuerdruckes p_EDS den Arbeitsdruck p_A regeln. Die Parallelschaltung der beiden Druckregelventile 2 und 3 arbeitet stationär betrachtet als hydraulische Verstärkerschaltung. Das bedeutet, dass der über die Vorsteuerdruck-Leitung 7 an den Ventilschiebern 2A und 3A jeweils anliegende Vorsteuerdruck p_EDS durch das Kräftegleichgewicht an den Ventilschiebern 2A, 3A in ein höheres Druckniveau in der Arbeitsdruck-Leitung 4 verstärkt wird. Die Verstärkung ist dabei durch die Ventilgeometrie vorgegeben und konstruktiv durch Durchmessersprünge zwischen Ringflächen bzw. Steuerflächen 2A1F, 2A3F bzw. 3A1F, 3A3F der Ventilschieber-Außenabschnitten 2A1 und 2A3 bzw. 3A1 und 3A3 und somit zwischen dem Arbeitsdruckanschluss und der Hochdruck-Leitung 5 umgesetzt.

Stationär betrachtet lassen sich die Positionen x(2A) und x(3A) der Ventilschieber 2A und 3A in axialer Richtung X in Abhängigkeit der hydraulischen Randbedingungen im Bereich der Hochdruck-Ventiltaschen 2B1, 3B1, der Arbeitsdruck-Ventiltaschen 2B2, 3B2, der Niederdruck-Ventiltaschen 2B3, 3B3 sowie der Vorsteuerdruck-Ventiltaschen 2B4, 3B4 über folgende formelmäßige Zusammenhänge abschätzen:

$$x(2A) = Udk2 \cdot p\_A / p\_sys$$

$$x(3A) = Udk3 \cdot p\_A / p\_sys$$

Die unterschiedlichen Ventilüberdeckungen Udk2 und Udk3 der beiden Druckregelventile 2, 3 führen im Kleinsignalverhalten zu unterschiedlichen Stellwegen x(2A) und x(3A) bzw. Ventilausschlägen der Ventilschieber 2A, 3A bei Betriebspunktänderungen der Druckregelventile 2 und 3.

Werden die Ventilschieber 2A und 3A bei konstantem Hochdruck p_sys über eine Wegstrecke Δx(2A) bzw. Δx(3A) verstellt, ist die Wegänderung der Ventilschieber 2A und 3A unter Berücksichtigung der vorstehend aufgeführten formelmäßigen Zusammenhänge gleich dem Produkt aus der Ventilüberdeckung Udk2 bzw. Udk3 und dem Quotienten aus der Druckänderung des Arbeitsdruckes $\Delta p\_A$ und dem Hochdruck p_sys.

Bei einer Kleinsignaländerung des Arbeitsdruckes p_A in einem Druckarbeitspunkt führt das Druckregelventil 3 aufgrund der doppelt so großen Ventilüberdeckung Udk3 doppelt so große Ventilausschläge $\Delta x(3A)$ aus wie das Druckregelventil 2, um den neuen Betriebspunkt einzustellen.

Wenn die typischen Toleranzgrenzen in einer Einzelauslegung der Druckregelventile 2 und 3 beispielsweise in einen Bereich von 0,2 bis 04 mm liegen, ist aufgrund der Parallelschaltung der Druckregelventile 2 und 3 eines der Druckregelventile mit 0,1 bis 0,3 und das andere Druckregelventil auf 0,3 bis 0,5 mm tolerierbar.

Das Druckregelventil 3 liefert aufgrund der größeren Ventilüberdeckung Udk3 ein anderes Kleinsignalverhalten, größere Stellausschläge und damit einen anderen Durchflussanteil in der Summendynamik der Parallelschaltung. Gleichzeitig tritt im Bereich des Druckregelventils 3 aufgrund der größeren Ventilüberdeckung Udk3, die bei dem vorliegend betrachteten Beispiel doppelt so groß ist wie die Ventilüberdeckung Udk2 des Druckregelventils 2, eine geringere Ventilleckage ausgehend von der Arbeitsdruck-Ventiltasche 3B2 in Richtung der Tankdrucktasche bzw. der Niederdruck-Ventiltasche 3B3 auf. Dies bedingt die größere Ventilüberdeckung Udk3, aus der eine größere Dichtlänge zwischen der Hochdruck-Leitung 5 und der Niederdruck-Leitung 6 resultiert.

Da die Druckregelventile 2 und 3 in Betriebspunkten innerhalb der Ventilüberdeckung jeweils als hydraulische Halbbrücken arbeiten und zu einer Druckänderung im Arbeitspunkt, also einer Druckänderung des Arbeitsdruckes p_A, aber eine Durchflussänderung ausgehend von der Hochdruck-Leitung 5 in Richtung der Arbeitsdruck-Leitung 4 notwendig ist, tragen die beiden Druckregelventile 2 und 3 durch ihre unterschiedlich großen Stellausschläge jeweils unterschiedliche Durchflussbeiträge bei.

Das unterschiedliche Kleinsignalverhalten zeigt sich beispielsweise bei Schmutz- oder Lufteinträgen in das Hydraulikfluid. Werden die Ventilschieber 2A, 3A nur wenig bewegt, setzen diese sich bevorzugterweise mit Feinstpartikeln zu, während eine Auslegung der Druckregelventile 2 und 3 mit öfter bewegten Ventilschiebern 2A, 3A, die ständig hohe Stellbewegungen ausführen, durch ihre Bewegungsenergie sich häufiger frei reißen und andere Haft- und Reibungsparameter zeigen.

In Summe lässt sich durch die unterschiedliche Kleinsignaldynamik der beiden Druckregelventile 2, 3 - bei gleichen stationären Eigenschaften bzw. bei gleicher Ventilverstärkung - eine optimale Abstimmung auf eine möglichst breite Partikelgrößenverteilung erreichen.

Bei einem Festklemmen eines der Druckregelventile 2 oder 3 kann das jeweils andere Druckregelventil 3 oder 2 nach wie vor einen Großteil der Funktionsanforderungen an die Parallelschaltung der Druckregelventile 2 und 3 erfüllen. Dies ist besonders bei Druckanforderungen und kapazitiver Last sogar zu 100% möglich. Das Druckniveau kann auch nur mit einem der Druckregelventile 2 oder 3 eingestellt werden. Wenn einer der Ventilschieber 2A oder 3A eines der Druckregelventile 2 oder 3 auf Zulauf klemmt, liegt ein hydraulischer Kurzschluss zwischen der Hochdruck-Ventilleitung 5 und der Arbeitsdruck-Leitung 4 vor. Dann stellt das jeweils andere Druckregelventil 3 oder 2 sich durch seine Regelfunktion automatisch auf den Tankanschluss bzw. die Niederdruck-Leitung 6. Dadurch ist, je nach Arbeitspunkt des Hydrauliksystems 1, zumindest noch eine deutliche Druckreduzierung erreichbar.

Die Parallelschaltung der Druckregelventile 2 und 3 weist aufgrund der unterschiedlichen Ventilüberdeckungen Udk2 und Udk3 eine hohe Robustheit gegenüber Störungen auf, die durch Verschmutzungen, Verklemmungen, Ausfällen, durch Vibrationen oder Veränderungen in den Reibungswerten auftreten. Geringere Störungen bzw. Veränderungen von Betriebsparametern des Hydrauliksystems 1, die durch eine Verschmutzung des Hydraulikmediums, Viskositätsänderungen des Hydraulikmediums, Kristallbildung von Öl-Additiven, Verschleiß an Aktuatorik- oder Ventilteilen oder dergleichen ausgelöst werden, bewirken bei der vorliegenden Parallelschaltung der Druckregelventile 2 und 3 daher jeweils auch nur kleine Störungen der hydraulischen Funktion.

Im Unterschied zu Anwendungen im Flugzeugbau oder im Industrieanlagenbau, bei welchen aus Wartungsgründen ein möglichst hoher Gleichteileanteil angestrebt wird, kann der Aufwand im vorliegenden Anwendungsfall bei Automatikgetrieben auf eine leicht erhöhte Fertigung bzw. Montage beschränkt werden. Dies ist der Fall, da in hydraulischen Steuerungen von Automatikgetrieben üblicherweise einzelne Ventile im Normalfall nicht getauscht werden, sondern oftmals die komplette Steuerung ersetzt wird.

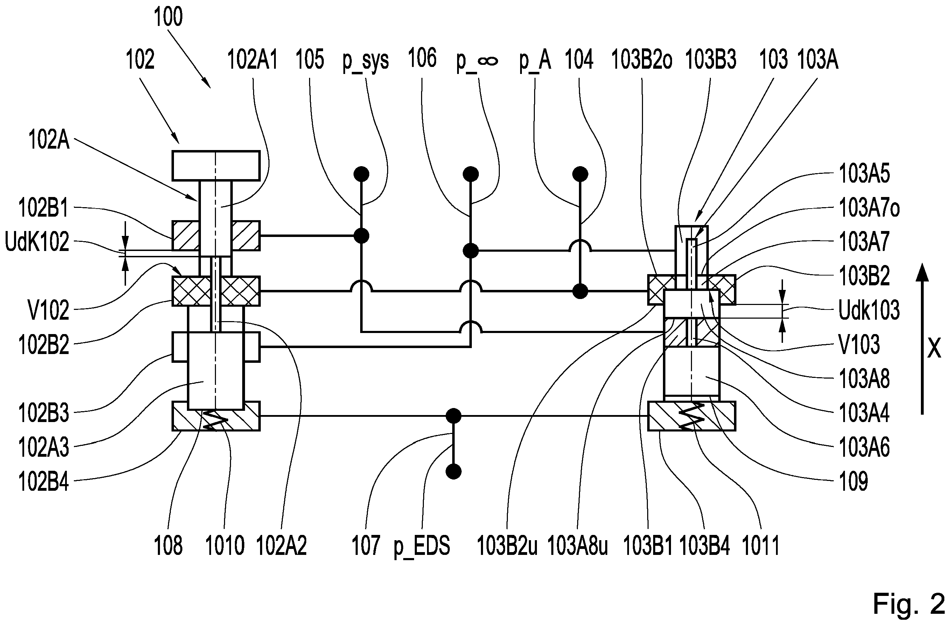

Fig. 2 zeigt eine Fig. 1 entsprechende Darstellung einer weiteren Ausführungsform eines Hydrauliksystems 100 mit zwei vorgesteuerten Druckregelventilen 102 und 103 in einer Parallelschaltung. Das Hydrauliksystem 100 weist im Wesentlichen die gleiche Funktionalität wie das Hydrauliksystem 1 auf. Zudem weist das Druckregelventil 102 des Hydrauliksystems 100 denselben konstruktiven Aufbau wie die Druckregelventile 2 und 3 des Hydrauliksystems 1 auf. Die vorgesteuerten Druckregelventile 102, 103 sind mit unterschiedlichen Ventilüberdeckungen Udk102, Udk103 ausgeführt und zur Einstellung des Arbeitsdruckes p_A vorgesehen, der in einer Arbeitsdruck-Leitung 104 vorliegt. Die Arbeitsdruck-Leitung 104 zweigt von den Druckregelventilen 102, 103 in Richtung einer Aktuatorik eines nicht näher dargestellten Automatikgetriebes ab. Die Druckregelventile 102, 1033 weisen jeweils einen Ventilschieber 102A, 103A auf, die jeweils in Ventilgehäusen 102B, 103B längsbeweglich geführt sind.

Das Hydrauliksystem 100 ist zudem mit einer Hochdruck-Leitung 105 ausgeführt, in der der Systemdruck p_sys anliegt. Zusätzlich umfasst das Hydrauliksystem 100 eine Niederdruck-Leitung 106, in der im Wesentlichen der Umgebungsdruck bzw. der atmosphärische Umgebungsdruck p_∞ vorliegt.

Die Hochdruck-Leitung 105 ist jeweils mit Hochdruck-Ventiltaschen 102B1 bzw. 103B1 der Druckregelventile 102, 103 verbunden, während die Arbeitsdruck-Leitung 104 mit sogenannten Arbeitsdruck-Ventiltaschen 102B2 bzw. 103B2 der Druckregelventile 102, 103 gekoppelt ist. Die Niederdruck-Leitung 106 zweigt von sogenannten Niederdruck-Ventiltaschen 102B3 bzw. 103B3 der Druckregelventile 102, 103 in Richtung eines nicht näher dargestellten Hydraulikfluidreservoirs bzw. eines Ölsumpfes des Automatikgetriebes ab. Die Arbeitsdruck-Ventiltaschen 102B2, 103B2 der Druckregelventile 102, 103 sind vorliegend in axialer Richtung X zwischen den Hochdruck-Ventiltaschen 102B1, 103B1 und den Niederdruck-Ventiltaschen 102B3 , 103B3 der Druckregelventile 102, 103 angeordnet.

Zur Vorsteuerung umfassen die Druckregelventile 102, 103 jeweils eine Vorsteuerdruck-Ventiltasche 102B4 bzw. 103B4, an den jeweils eine Vorsteuerdruck-Leitung 107 anliegt. Über die Vorsteuerdruck-Leitung 107 ist an Steuerflächen 108 bzw. 109 der Ventilschieber 102A bzw. 103A unmittelbar ein Vorsteuerdruck p_EDS anlegbar, der im Bereich eines nicht näher dargestellten elektrohydraulischen Druckstellers einstellbar ist.

Des Weiteren umfassen die Druckregelventile 102, 103 jeweils eine Federeinheit 1010, 1011, deren Federkräfte jeweils an den Ventilschiebern 102A, 103A in Stellrichtungen der Ventilschieber 102A, 103A angreifen, die eine Reduzierung von Volumenströmen ausgehend von den Arbeitsdruck-Ventiltaschen 102B2, 103B2 in Richtung der Niederdruck-Ventiltaschen 102B3, 103B3 bewirken.

Die Ventilschieber 102A des Druckregelventiles 102 ist mit drei Ventilschieber-Abschnitten 102A1 bis 102A3 ausgeführt. Dabei stellen die Ventilschieber-Abschnitte 102A1 und 102A3 jeweils Ventilschieber-Außenabschnitte des Ventilschiebers 102A dar. Zwischen den Ventilschieber-Außenabschnitten 102A1 und 102A3 ist in axialer Richtung X des Ventilschiebers 102A der Ventilschieber-Abschnitt 102A2 vorgesehen, der nachfolgend auch als Ventilschieber-Zwischenabschnitt bezeichnet wird. Der Außendurchmesser des Ventilschieber-Zwischenabschnittes 102A2 ist kleiner als die Außendurchmesser der Ventilschieber-Außenabschnitte 102A1, 102A3. Zusätzlich ist der Außendurchmesser des Ventilschieber-Außenabschnittes 102A3 größer als der Außendurchmesser des Ventilschieber-Außenabschnittes 102A1.

Das Druckregelventil 103 stellt im Vergleich zum Druckregelventil 102 ein sogenanntes inverses Ventil dar. Bei dem Druckregelventil 103 ist die Anordnung der Arbeitsdruck-Ventiltasche 103B2 und der Hochdruck-Ventiltasche 103B1 im Vergleich zum Druckregelventil 102 in axialer Richtung X vertauscht und gleichzeitig die Geometrie des Ventilschiebers 103A invertiert. Das Druckregelventil 103 weist trotzdem die gleiche hydraulische Funktionalität wie das Druckregelventil 102 auf.

Die Arbeitsdruck-Ventiltasche 103B2 des invers ausgeführten Druckregelventiles 103 ist als sogenannte Volltasche ausgeführt, während die Hochdruck-Ventiltasche 103B1 und die Niederdruck-Ventiltasche 103B3 jeweils lediglich als sogenannte Teilventiltaschen ausgeführt sind. Dadurch greift im Betrieb des Hydrauliksystems 100 im Wesentlichen keine Querkraft am Ventilschieber 103A des Druckregelventils 103 an. Die Vollventiltasche bzw. Arbeitsdruck-Ventiltasche 103B2 des Druckregelventiles 103 ist im Ventilgehäuse 103B ausgeführt. Dabei ist ein Innendurchmesser der Arbeitsdruck-Ventiltasche 103B2 größer als der damit zusammenwirkende Außendurchmesser des Ventilschiebers 103A.

Im Unterschied dazu sind die Teilventiltaschen bzw. die Niederdruck-Ventiltasche 103B3 und die Hochdruck-Ventiltasche 103B1 des Druckregelventiles 103 lediglich durch Ventilschieber-Taschenabschnitte 103A4 bzw. 103A5 gebildet. Im Bereich der Ventilschieber-Taschenabschnitte 103A4 und 103A5 sind die Außendurchmesser des Ventilschiebers 103A jeweils kleiner als Innendurchmesser von axialen Ventilgehäuse-Führungsabschnitten 103B5, 103B6, in deren Bereichen der Ventilschieber 103A des Druckregelventiles 103 über Ventilschieber-Führungsabschnitte 103A6, 103A7 längsbeweglich geführt ist. Die Außendurchmesser der Ventilschieber-Führungsabschnitte 103A6 und 103A7 sind jeweils größer als die Außendurchmesser der Ventilschieber-Taschenabschnitte 103A4 und 103A5 und entsprechen wenigstens annähernd Innendurchmessern der Ventilgehäuse-Führungsabschnitte 103B5 bzw. 103B6.

Die Ventilüberdeckung Udk102 des Druckregelventils 102 ist kleiner als die Ventilüberdeckung Udk103 des Druckregelventils 103. Dabei entspricht die Ventilüberdeckung Udk102 des Druckregelventils 102 einem axialen Abstand zwischen einer in axialer Richtung X unteren Steuerkante 102B1u der Hochdruck-Ventiltasche 102B1 und einer unteren Steuerkante 102A1u des Ventilschieber-Außenabschnittes 102A1 des Ventilschiebers 102A des Druckregelventils 102, wenn der Ventilschieber 102A 3A sich in einer axialen Ventilschieberstellung befindet, in der eine obere Steuerkante 102A3o des Ventilschieber-Außenabschnittes 102A3 des Ventilschiebers 102A des Druckregelventils 102 bündig mit einer oberen Steuerkante 102B3o der Niederdruck-Ventiltasche 102B3 abschließt.

Darüber hinaus ist die Ventilüberdeckung Udk103 des Druckregelventiles 103 definitionsgemäß gleich einem axialen Abstand zwischen einer in axialer Richtung X unteren Steuerkante 103B2u der Arbeitsdruck-Ventiltasche 103B2 und einer unteren Steuerkante 103A8u eines Ventilschieber-Abschnittes 103A8 des Ventilschiebers 103A des Druckregelventils 103, wenn der Ventilschieber 103A sich in einer axialen Ventilschieberstellung befindet, in der eine obere Steuerkante 103A7o des Ventilschieber-Führungsabschnittes 103A7 des Ventilschiebers 103A des Druckregelventils 103 bündig mit einer oberen Steuerkante 103B2o der Arbeitsdruck-Ventiltasche 103B2 abschließt. Vorliegend ist die Ventilüberdeckung Udk3 des Druckregelventils 3 doppelt so groß wie die Ventilüberdeckung Udk2 des Druckregelventiles 2.

Die Druckregelventile 102, 103 stellen ebenfalls mechanische Regler dar, die in Abhängigkeit des Systemdrucks p_sys, des Umgebungsdruckes p_∞ und des Vorsteuerdruckes p_EDS den Arbeitsdruck p_A regeln. Die Parallelschaltung der beiden Druckregelventile 102 und 103 arbeitet stationär betrachtet wie die Parallelschaltung der Druckregelventile 2 und 3 als hydraulische Verstärkerschaltung. Das bedeutet, dass der über die Vorsteuerdruck-Leitung 107 an den Ventilschiebern 102A und 103A jeweils anliegende Vorsteuerdruck p_EDS durch das Kräftegleichgewicht an den Ventilschiebern 102A, 103A in ein höheres Druckniveau in der Arbeitsdruck-Leitung 104 verstärkt wird. Die Verstärkung ist dabei durch die Ventilgeometrie vorgegeben und konstruktiv durch den Durchmessersprung der Ringflächen 102A1F und 102A3F zwischen den Ventilschieber-Außenabschnitten 102A1 und 102A3 und somit zwischen dem Arbeitsdruckanschluss und der Hochdruck-Leitung 105 umgesetzt. Bei dem Druckregelventil 103 ergibt sich die Ventilverstärkung durch den Durchmessersprung, der eine Steuerfläche 103A8F des Ventilschieber-Abschnittes 103A8 definiert, zwischen den Außendurchmessern der Ventilschieber-Abschnitte 103A7 und 103A8.

Stationär betrachtet lassen sich die Positionen x(102A) und x(103A) der Ventilschieber 102A und 103A in axialer Richtung X in Abhängigkeit der hydraulischen Randbedingungen im Bereich der Hochdruck-Ventiltaschen 102B1, 103B1, der Arbeitsdruck-Ventiltaschen 102B2, 103B2, der Niederdruck-Ventiltaschen 102B3, 103B3 sowie der Vorsteuerdruck-Ventiltaschen 102B4, 103B4 ebenfalls über die vorstehend beschriebenen formelmäßigen Zusammenhänge abschätzen .

Die unterschiedlichen Ventilüberdeckungen Udk102 und Udk103 der beiden Druckregelventile 102, 103 führen im Kleinsignalverhalten zu unterschiedlichen Stellwegen x(102A) und x(103A) bzw. Ventilausschlägen der Ventilschieber 102A, 103A bei Betriebspunktänderungen der Druckregelventile 102 und 103.

Werden die Ventilschieber 102A und 103A bei konstantem Hochdruck p_sys über eine Wegstrecke △x(102A) bzw. △x(103A) verstellt, ist die Wegänderung der Ventilschieber 102A und 103A unter Berücksichtigung der vorstehend aufgeführten formelmäßigen Zusammenhänge gleich dem Produkt aus der Ventilüberdeckung Udk102 bzw. Udk103 und dem Quotienten aus der Druckänderung des Arbeitsdruckes △p_A und dem Hochdruck p_sys.

Bei einer Kleinsignaländerung des Arbeitsdruckes p_A in einem Druckarbeitspunkt führt das Druckregelventil 103 aufgrund der doppelt so großen Ventilüberdeckung Udk103 doppelt so große Ventilausschläge △x(103A) aus wie das Druckregelventil 102, um den neuen Betriebspunkt einzustellen.

Das Druckregelventil 103 liefert aufgrund der größeren Ventilüberdeckung Udk103 ein anderes Kleinsignalverhalten, größere Stellausschläge und damit einen anderen Durchflussanteil in der Summendynamik der Parallelschaltung. Gleichzeitig tritt im Bereich des Druckregelventils 103 aufgrund der größeren Ventilüberdeckung Udk103, die bei dem vorliegend betrachteten Beispiel doppelt so groß ist wie die Ventilüberdeckung Udk102 des Druckregelventils 102, eine geringere Ventilleckage ausgehend von der Arbeitsdruck-Ventiltasche 103B2 in Richtung der Tankdrucktasche bzw. der Niederdruck-Ventiltasche 103B3 auf.

Die Druckregelventile 102 und 103 arbeiten in Betriebspunkten innerhalb der Ventilüberdeckung ebenfalls als hydraulische Halbbrücken. Des Weiteren tragen die beiden Druckregelventile 102 und 103 durch ihre unterschiedlich großen Stellausschläge jeweils unterschiedliche Durchflussbeiträge bei.

Um in der Arbeitsdruck-Leitung 104 des Hydrauliksystems 100 den Arbeitsdruck p_A erhöhen zu können, sind die beiden Ventilschieber 102A und 103A der Druckregelventile 102 und 103 in der Zeichenebene von Fig. 2 in axialer Richtung X nach oben zu bewegen. Befindet sich in der Hochdruck-Leitung 105 bzw. im Bereich der Überdeckung zwischen einem Ventilschieber 102A bzw. 103A und dem Ventilgehäuse 102B bzw. 103B ein Span, sammeln sich dort durch den ständigen Leckageölstrom bei längeren, quasi stationären Betriebspunkten Partikel an und es entsteht das sogenannte Silting. Werden die Ventilschieber 102A und 103A bei der Umsetzung einer Anforderung für eine Betriebspunktänderung in axialer Richtung X verstellt, wird der Ventilschieber 102A des Druckregelventils 102 gegen die Strömungsrichtung des Leckageölstromes V102 und der Ventilschieber 103A in Strömungsrichtung des Leckageölstromes V103 verschoben. Je nach Partikelstruktur und Eintragungsort, d.h. einer Verschmutzung in der Hochdruck-Leitung 105 oder einer Verschmutzung in der Arbeitsdruck-Leitung 104, kann das Druckregelventil 102 oder das Druckregelventil 103 günstiger für den Weitertransport oder die mechanische Deformation eines derartigen Partikels sein.

Bezugszeichen

1, 100 Hydrauliksystem
2, 102 Druckregelventil

2A, 102A Ventilschieber des Druckregelventils 2 bzw. 102

2A1, 102A1 Ventilschieber-Außenabschnitt des Druckregelventils 2 bzw. 102

2A1F, 102A1F Ringfläche des Ventilschieber-Außenabschnittes 2A1 bzw. 102A1

2A1u, 102A1u untere Steuerkante des Ventilschieber-Außenabschnittes 2A1 bzw. 102A1 des Druckregelventils 2 bzw. 102

2A2, 102A2 Ventilschieber-Zwischenabschnitt des Ventilschiebers 2A bzw. 102A

2A3, 102A3 Ventilschieber-Außenabschnitt des Ventilschiebers 2A bzw. 102A

2A3F, 102A3F Ringfläche des Ventilschieber-Außenabschnittes 2A3 bzw. 102A3

2A3o, 102A3o obere Steuerkante des Ventilschieber-Außenabschnittes 2A3 bzw. 102A3 des Druckregelventils 2 bzw. 102

2B, 102B Ventilgehäuse des Druckregelventils 2 bzw. 102

2B1, 102B1 Hochdruck-Ventiltasche des Druckregelventils 2 bzw. 102

2B2, 102B2 Arbeitsdruck-Ventiltasche des Druckregelventils 2 bzw. 102

2B3, 102B3 Niederdruck-Ventiltasche des Druckregelventils 2 bzw. 102

2B4, 102B4 Vorsteuerdruck-Ventiltasche des Druckregelventils 2 bzw. 102

2B1u, 102B1u untere Steuerkante der Hochdruck-Ventiltasche des Druckregelventils 2 bzw. 102

3, 103 Druckregelventil

3A, 103A Ventilschieber des Druckregelventils 3 bzw. 103

3A1 Ventilschieber-Außenabschnitt des Druckregelventils 3

3A1F Ringfläche des Ventilschieber-Außenabschnittes 3A1

3A1u untere Steuerkante des Ventilschieber-Außenabschnittes 3A1 des Druckregelventils 3

3A2, 103A2 Ventilschieber-Zwischenabschnitt des Ventilschiebers 3A bzw. 103A

3A3 Ventilschieber-Außenabschnitt des Druckregelventils 3

3A3F Ringfläche des Ventilschieber-Außenabschnittes 3A3

3A3o obere Steuerkante des Ventilschieber-Außenabschnittes 3A3 des Druckregelventils 3

103A4, 103A5 Ventilschieber-Taschenabschnitt

103A6, 103A7 Ventilschieber-Führungsabschnitt

103A7o obere Steuerkante des Ventilschieber-Führungsabschnittes 103A7

103A8 Ventilschieber-Abschnitt

103A8F Ringfläche des Ventilschieber-Abschnittes 103A8

103A8u untere Steuerkante des Ventilschieber-Außenabschnittes 103A8

3B, 103B Ventilgehäuse des Druckregelventils 3 bzw. 103

3B1, 103B1 Hochdruck-Ventiltasche des Druckregelventils 3 bzw. 103

3B1u untere Steuerkante der Hochdruck-Ventiltasche 3B1 des Druckregelventils 3

3B2, 103B2 Arbeitsdruck-Ventiltasche des Druckregelventils 3 bzw. 103

103B2u untere Steuerkante der Arbeitsdruck-Ventiltasche 103B2 des Druckregelventils 103

3B3, 103B3 Niederdruck-Ventiltasche des Druckregelventils 3 bzw. 103

3B3o obere Steuerkante der Niederdruck-Ventiltasche 3B3 des Druckregelventils 3

3B4, 103B4 Vorsteuerdruck-Ventiltasche des Druckregelventils 3 bzw. 103

103B5, 103B6 Ventilgehäuse-Führungsabschnitt

4, 104 Arbeitsdruck-Leitung des Hydrauliksystem 1 bzw. 100

5, 105 Hochdruck-Leitung des Hydrauliksystem 1 bzw. 100

6, 106 Niederdruck-Leitung des Hydrauliksystem 1 bzw. 100

7, 107 Vorsteuerdruck-Leitung des Hydrauliksystem 1 bzw. 100

8, 108 Steuerfläche des Ventilschiebers 2A bzw. 102A

9, 109 Steuerfläche des Ventilschiebers 3A bzw. 103A

10, 1010 Federeinheit des Druckregelventils 2 bzw. 102

11, 1011 Federeinheit des Druckregelventils 3 bzw. 103

p_A Arbeitsdruck

p_EDS Vorsteuerdruck

p_sys Systemdruck

p_∞ Umgebungsdruck

Udk2, Udk3 Ventilüberdeckung des Druckregelventiles 2 bzw. 3

Udk102, Udk103 Ventilüberdeckung des Druckregelventiles 102 bzw. 103

V102, V103 Leckageölstrom

X axiale Richtung

**Patentansprüche**

1. Hydrauliksystem (1; 100) mit wenigstens zwei vorgesteuerten Druckregelventilen (2, 3; 102, 103) in Parallelschaltung zur Einstellung eines Arbeitsdruckes (p_A), wobei die Druckregelventile (2, 3; 102, 103) jeweils wenigstens einen Ventilschieber (2A, 3A; 102A, 103A) aufweisen, die jeweils in Ventilgehäusen (2B, 3B; 102B, 103B) längsbeweglich geführt sind, und wobei eine Hochdruck-Leitung (5; 105) jeweils mit Hochdruck-Ventiltaschen (2B1, 3B1; 102B1, 103B1), eine Arbeitsdruck-Leitung (4; 104) jeweils mit Arbeitsdruck-Ventiltaschen (2B2, 3B2; 102B2, 103B2) und eine Niederdruck-Leitung (6; 106) jeweils mit Niederdruck-Ventiltaschen (2B3, 3B3; 102B3, 103B3) der Druckregelventile (2, 3; 102, 103) verbunden sind, **dadurch gekennzeichnet, dass** die Druckregelventile (2, 3; 102, 103) mit unterschiedlichen Ventilüberdeckungen (Udk2, Udk3), also unterschiedlichen axialen Abständen zwischen Steuerkanten der jeweiligen Hochdruck-Ventiltasche (2B1, 3B1; 102B1, 103B1) und der Niederdruck-Ventiltasche (2B3, 3B3; 102B3, 103B3) abzüglich eines axialen Abstandes zwischen Steuerkanten der Ventilschieber (2A, 3A; 102A, 103A), die mit Steuerkanten der Hochdruck-Ventiltasche (2B1, 3B1; 102B1, 103B1) und der Niederdruck-Ventiltasche (2B3, 3B3; 102B3, 103B3) zusammenwirken, ausgeführt sind.

2.  Hydrauliksystem nach Anspruch 1, **dadurch gekennzeichnet, dass** die Arbeitsdruck-Ventiltaschen (2B2, 3B2; 102B2, 103B2) in axialer Richtung (X) jeweils zwischen den Hochdruck-Ventiltaschen (2B1, 3B1; 102B1, 103B1) und den Niederdruck-Ventiltaschen (2B3, 3B3; 102B3, 103B3) vorgesehen sind.

3.  Hydrauliksystem nach Anspruch 1 oder 2, **dadurch gekennzeichnet, dass** die Ventilschieber (2A, 3A; 102A, 103A) der Druckregelventile (2, 3; 102, 103) mehrere Ventilschieber-Abschnitte (2A1 bis 2A3, 3A1 bis 3A3; 102A1 bis 102A3, 103A4 bis 103A8) mit unterschiedlichen Außendurchmessern aufweisen, wobei jeweils ein Außendurchmesser eines Ventilschieber-Zwischenabschnittes (2A2, 3A2; 102A2, 103A4, 103A7), der in axialer Richtung zwischen zwei Ventilschieber-Außenabschnitten (2A1 und 2A3 bzw. 3A1 und 3A3; 102A1 und 102A3, 103A5 und 103A8, 103A8 und 103A6) angeordnet ist, zumindest kleiner ist als der Außendurchmesser eines der Ventilschieber-Außenabschnitte (2A1, 2A3 bzw. 3A1, 3A3; 102A1, 102A3, 103A6, 103A8).

4.  Hydrauliksystem nach Anspruch 3, **dadurch gekennzeichnet, dass** der Außendurchmesser eines der Ventilschieber-Außenabschnitte (2A3, 3A3; 102A3) größer ist als der Außendurchmesser des anderen Ventilschieber-Außenabschnittes (2A1, 3A1; 102A3) von zumindest einem der Ventilschieber (2A, 3A; 102A) der Druckregelventile (2, 3; 102), wobei an der Differenzfläche zwischen einander zugewandten Steuerflächen (2A1F, 2A3F, 3A1F, 3A3F; 102A1F, 102A3F) eines der Ventilschieber (2A, 3A; 102A), die jeweils von den Außendurchmessern der Ventilschieber-Außenabschnitte (2A1, 2A3 bzw. 3A1, 3A3; 102A1, 102A3) und dem Außendurchmesser des Ventilschieber-Zwischenabschnittes (2A2, 3A2; 102A2) begrenzt sind, der Druck (p_A) in der Arbeitsdruck-Leitung (4; 104) anliegt und am Ventilschieber (2A, 3A; 102A) in eine Stellrichtung des Ventilschiebers (2A, 3A; 102A) angreift, die eine Reduzierung eines Volumenstromes ausgehend von der Hochdruck-Ventiltasche (2B1, 3B1; 102B1) in Richtung der Arbeitsdruck-Ventiltasche (2B2, 3B2; 102B2) und eine Erhöhung des Volumenstromes ausgehend von der Arbeitsdruck-Ventiltasche (2B2, 3B2; 102B2) in Richtung der Niederdruck-Ventiltasche (2B3, 3B3; 102B3) bewirkt.

5.  Hydrauliksystem nach Anspruch 3, **dadurch gekennzeichnet, dass** an einer Steuerfläche (103A8F) eines der Ventilschieber (103A), die vom Außendurchmesser des Ventilschieber-Außenabschnittes (103A8), dessen Außendurchmesser größer ist als der Außendurchmesser des anderen Ventilschieber-Außenabschnittes (103A7), und dem Außendurchmesser des anderen Ventilschieber-Abschnittes (103A7) begrenzt ist, der Druck in der Arbeitsdruck-Leitung (104) anliegt und am Ventilschieber (103A) in eine Stellrichtung des Ventilschiebers (103A) angreift, die eine Reduzierung eines Volumenstromes ausgehend von der Hochdruck-Ventiltasche (103B1) in Richtung der Arbeitsdruck-Ventiltasche (103B2) und eine Erhöhung des Volumenstromes ausgehend von der Arbeitsdruck-Ventiltasche (103B2) in Richtung der Niederdruck-Ventiltasche (103B3) bewirkt.

6.  Hydrauliksystem nach einem der vorstehenden Ansprüche, **dadurch gekennzeichnet, dass** an Vorsteuerdruck-Ventiltaschen (2B4, 3B4; 102B4, 103B4) der Druckregelventile (2, 3; 102, 103) jeweils ein Vorsteuerdruck (p_EDS) an Steuerflächen (8, 9; 108; 109) der Ventilschieber (2A, 3A; 102A, 103A) der Druckregelventile (2, 3; 102, 103) anlegbar ist, der an den Ventilschiebern (2A, 3A; 102A, 103A) jeweils in Stellrichtungen der Ventilschieber (2A, 3A; 102A, 103A) angreift, die eine Erhöhung des Volumenstromes ausgehend von den Hochdruck-Ventiltaschen (2B1, 3B1; 102B1, 103B1) in Richtung der Arbeitsdruck-Ventiltaschen (2B2, 3B2; 102B2, 103B2) und eine Reduzierung der Volumenströme ausgehend von den Arbeitsdruck-Ventiltaschen (2B2, 3B2; 102B2, 103B2) in Richtung der Niederdruck-Ventiltaschen (2B3, 3B3; 102B3, 103B3) bewirkt.

7.  Hydrauliksystem nach einem der vorstehenden Ansprüche, **dadurch gekennzeichnet, dass** die Druckregelventile (2, 3; 102, 103) jeweils eine Federeinheit (10, 11; 1010, 1011) umfassen, deren Federkräfte jeweils an den Ventilschiebern (2A, 3A; 102A, 103A) in Stellrichtungen der Ventilschieber (2A, 3A; 102A, 103A) angreifen, die eine Reduzierung von Volumenströmen ausgehend von den Arbeitsdruck-Ventiltaschen (2B2, 3B2; 102B2, 103B2) in Richtung der Niederdruck-Ventiltaschen (2B3, 3B3; 102B3, 103B3) bewirkt.

8.  Hydrauliksystem nach einem der vorstehenden Ansprüche, **dadurch gekennzeichnet, dass** die Arbeitsdruck-Ventiltaschen (2B3, 3B3; 102B3, 103B2) der Druckregelventile (2, 3; 102, 103) in den Ventilgehäusen (2B, 3B; 102B, 103B) ausgeführt sind und deren Innendurchmesser größer sind als die Außendurchmesser der Ventilschieber (2A, 3A; 102A, 103A).

9. Hydrauliksystem nach einem der vorstehenden Ansprüche, **dadurch gekennzeichnet, dass** die Hochdruck-Ventiltasche (2B1, 3B1; 102B1) und die Niederdruck-Ventiltasche (2B3, 3B3; 102B3) von zumindest einem der beiden Druckregelventile (2, 3; 102) im Ventilgehäuse (2B, 3B; 102B) des Druckregelventils (2, 3; 102) vorgesehen sind, deren Innendurchmesser jeweils größer als die Außendurchmesser des Ventilschiebers (2A, 3A; 102A) sind.

10. Hydrauliksystem nach einem der vorstehenden Ansprüche, **dadurch gekennzeichnet, dass** die Niederdruck-Ventiltasche (103B3) und die Hochdruck-Ventiltasche (103B1) wenigstens eines der Druckregelventile (103) jeweils durch Ventilschieber-Taschenabschnitte (103A4, 103A5) gebildet sind, deren Außendurchmesser jeweils kleiner als Innendurchmesser von axialen Ventilgehäuse-Führungsabschnitten (103B5, 103B6) sind, in deren Bereichen der Ventilschieber (103A) über Ventilschieber-Führungsabschnitte (103A6, 103A7, 103A8) längsbeweglich geführt ist, wobei die Außendurchmesser der Ventilschieber-Führungsabschnitte (103A6, 103A7, 103A8) jeweils größer als die Außendurchmesser der Ventilschieber-Taschenabschnitte (103A4, 103A5) sind und wenigstens annähernd Innendurchmessern der Ventilgehäuse-Führungsabschnitte (103B5, 103B6) entsprechen.

## Claims

1. Hydraulic system (1; 100) having at least two pilot-controlled pressure-regulating valves (2, 3; 102, 103) which are connected in parallel and serve for setting a working pressure (p_A), wherein the pressure-regulating valves (2, 3; 102, 103) each have at least one valve slide (2A, 3A; 102A, 103A), which are guided in a longitudinally movable manner in respective valve housings (2B, 3B; 102B, 103B), and wherein a high-pressure line (5; 105) is connected to respective high-pressure valve pockets (2B1, 3B1; 102B1, 103B1), a working-pressure line (4; 104) is connected to respective working-pressure valve pockets (2B2, 3B2; 102B2, 103B2), and a low-pressure line (6; 106) is connected to respective low-pressure valve pockets (2B3, 3B3; 102B3, 103B3), of the pressure-regulating valves (2, 3; 102, 103), **characterized in that** the pressure-regulating valves (2, 3; 102, 103) are designed with different valve overlaps (Udk2, Udk3), that is to say different axial distances between control edges of the respective high-pressure valve pocket (2B1, 3B1; 102B1, 103B1) and low-pressure valve pocket (2B3, 3B3; 102B3, 103B3) minus an axial distance between control edges of the valve slides (2A, 3A; 102A, 103A) that interact with control edges of the high-pressure valve pocket (2B1, 3B1; 102B1, 103B1) and low-pressure valve pocket (2B3, 3B3; 102B3, 103B3).

2. Hydraulic system according to Claim 1, **characterized in that** the working-pressure valve pockets (2B2, 3B2; 102B2, 103B2) are provided between the respective high-pressure valve pockets (2B1, 3B1; 102B1, 103B1) and low-pressure valve pockets (2B3, 3B3; 102B3, 103B3) in the axial direction (X).

3. Hydraulic system according to Claim 1 or 2, **characterized in that** the valve slides (2A, 3A; 102A, 103A) of the pressure-regulating valves (2, 3; 102, 103) have multiple valve-slide sections (2A1 to 2A3, 3A1 to 3A3; 102A1 to 102A3, 103A4 to 103A8) with different outer diameters, wherein a respective outer diameter of a valve-slide intermediate section (2A2, 3A2; 102A2, 103A4, 103A7) arranged between two valve-slide outer sections (2A1 and 2A3 or 3A1 and 3A3; 102A1 and 102A3, 103A5 and 103A8, 103A8 and 103A6) in the axial direction is at least smaller than the outer diameter of one of the valve-slide outer sections (2A1, 2A3 or 3A1, 3A3; 102A1, 102A3, 103A6, 103A8).

4. Hydraulic system according to Claim 3, **characterized in that** the outer diameter of one of the valve-slide outer sections (2A3, 3A3; 102A3) is greater than the outer diameter of the other valve-slide outer section (2A1, 3A1; 102A3) for at least one of the valve slides (2A, 3A; 102A) of the pressure-regulating valves (2, 3; 102), wherein, at the differential surface between mutually facing control surfaces (2A1F, 2A3F, 3A1F, 3A3F; 102A1F, 102A3F) of one of the valve slides (2A, 3A; 102A), which are delimited by the respective outer diameters of the valve-slide outer sections (2A1, 2A3 and 3A1, 3A3; 102A1, 102A3) and outer diameter of the valve-slide intermediate section (2A2, 3A2; 102A2), the pressure (p_A) in the working-pressure line (4; 104) prevails and acts on the valve slide (2A, 3A; 102A) in an actuating direction of the valve slide (2A, 3A; 102A) that brings about a reduction in a volume flow from the high-pressure valve pocket (2B1, 3B1; 102B1) in the direction of the working-pressure valve pocket (2B2, 3B2; 102B2) and an increase in the volume flow from the working-pressure valve pocket (2B2, 3B2; 102B2) in the direction of the low-pressure valve pocket (2B3, 3B3; 102B3).

5. Hydraulic system according to Claim 3, **characterized in that**, at a control surface (103A8F) of one of the valve slides (103A), which is delimited by the outer diameter of the valve-slide outer section (103A8), whose outer diameter is greater than the outer diameter of the other valve-slide outer section (103A7), and the outer diameter of the other valve-slide section (103A7), the pressure in the working-pressure line (104) prevails and acts on the valve slide (103A) in an actuating direction of the valve slide (103A) that brings about a reduction in a volume flow from the high-pressure valve pocket (103B1) in the direction of the working-pressure valve pocket (103B2) and an increase in the volume flow from the working-pressure valve pocket (103B2) in the direction of the low-pressure valve pocket (103B3).

6. Hydraulic system according to one of the preceding claims, **characterized in that**, at pilot-pressure valve pockets (2B4, 3B4; 102B4, 103B4) of the pressure-regulating valves (2, 3; 102, 103), there is able to be applied to control surfaces (8, 9; 108; 109) of the valve slides (2A, 3A; 102A, 103A) of the pressure-regulating valves (2, 3; 102, 103) a respective pilot pressure (p_EDS) which acts on the valve slides (2A, 3A; 102A, 103A) in respective actuating directions of the valve slides (2A, 3A; 102A, 103A) that bring about an increase in the volume flow from the high-pressure valve pockets (2B1, 3B1; 102B1, 103B1) in the direction of the working-pressure valve pockets (2B2, 3B2; 102B2, 103B2) and a reduction in the volume flows from the working-pressure valve pockets (2B2, 3B2; 102B2, 103B2) in the direction of the low-pressure valve pockets (2B3, 3B3; 102B3, 103B3).

7. Hydraulic system according to one of the preceding claims, **characterized in that** the pressure-regulating valves (2, 3; 102, 103) each comprise a spring unit (10, 11; 1010, 1011), whose spring forces act on the respective valve slides (2A, 3A; 102A, 103A) in actuating directions of the valve slides (2A, 3A; 102A, 103A) that bring about a reduction in volume flows from the working-pressure valve pockets (2B2, 3B2; 102B2, 103B2) in the direction of the low-pressure valve pockets (2B3, 3B3; 102B3, 103B3).

8. Hydraulic system according to one of the preceding claims, **characterized in that** the working-pressure valve pockets (2B3, 3B3; 102B3, 103B2) of the pressure-regulating valves (2, 3; 102, 103) are formed in the valve housings (2B, 3B; 102B, 103B) and their inner diameters are greater than the outer diameters of the valve slides (2A, 3A; 102A, 103A).

9. Hydraulic system according to one of the preceding claims, **characterized in that** the high-pressure valve pocket (2B1, 3B1; 102B1) and the low-pressure valve pocket (2B3, 3B3; 102B3) of at least one of the two pressure-regulating valves (2, 3; 102) are provided in the valve housing (2B, 3B; 102B) of the pressure-regulating valve (2, 3; 102), the inner diameters thereof being greater than the respective outer diameters of the valve slide (2A, 3A; 102A).

10. Hydraulic system according to one of the preceding claims, **characterized in that** the low-pressure valve pocket (103B3) and the high-pressure valve pocket (103B1) of at least one of the pressure-regulating valves (103) are formed by respective valve-slide pocket sections (103A4, 103A5), the outer diameters thereof being respectively smaller than inner diameters of axial valve-housing guide sections (103B5, 103B6) in whose regions the valve slide (103A) is guided in a longitudinally movable manner via valve-slide guide sections (103A6, 103A7, 103A8), wherein the outer diameters of the valve-slide guide sections (103A6, 103A7, 103A8) are respectively greater than the outer diameters of the valve-slide pocket sections (103A4, 103A5) and correspond at least approximately to inner diameters of the valve-housing guide sections (103B5, 103B6).

**Revendications**

1. Système hydraulique (1 ; 100) comprenant au moins deux soupapes de régulation de pression pilotées (2, 3 ; 102, 103) montées en parallèle pour régler une pression de travail (p_A), les soupapes de régulation de pression (2, 3 ; 102, 103) présentant respectivement au moins un tiroir de soupape (2A, 3A ; 102A, 103A) qui sont respectivement guidés de manière mobile longitudinalement dans des boîtiers de soupape (2B, 3B ; 102B, 103B), et une conduite haute pression (5 ; 105) étant reliée à des poches de soupape haute pression (2B1, 3B1 ; 102B1, 103B1), une conduite de pression de travail (4 ; 104) à des poches de soupape de pression de travail (2B2, 3B2 ; 102B2, 103B2) et une conduite basse pression (6 ; 106) à des poches de soupape basse pression (2B3, 3B3 ; 102B3, 103B3) des soupapes de régulation de pression (2, 3 ; 102, 103), **caractérisé en ce que** les soupapes de régulation de pression (2, 3 ; 102, 103) sont réalisées avec des chevauchements de soupapes (Udk2, Udk3) différents, c'est-à-dire des distances axiales différentes entre des bords de commande de la poche de soupape haute pression respective (2B1, 3B1 ; 102B1, 103B1) et de la poche de soupape basse pression (2B3, 3B3 ; 102B3, 103B3) moins une distance axiale entre des bords de commande des tiroirs de soupape (2A, 3A ; 102A, 103A) qui interagissent avec des bords de commande de la poche de soupape haute pression (2B1, 3B1 ; 102B1, 103B1) et de la poche de soupape basse pression (2B3, 3B3 ;

102B3, 103B3).

2. Système hydraulique selon la revendication 1, **caractérisé en ce que** les poches de soupape de pression de travail (2B2, 3B2 ; 102B2, 103B2) sont prévues dans la direction axiale (X) respectivement entre les poches de soupape haute pression (2B1, 3B1 ; 102B1, 103B1) et les poches de soupape basse pression (2B3, 3B3 ; 102B3, 103B3).

3. Système hydraulique selon la revendication 1 ou 2, **caractérisé en ce que** les tiroirs de soupape (2A, 3A ; 102A, 103A) des soupapes de régulation de pression (2, 3 ; 102, 103) présentent plusieurs sections de tiroir de soupape (2A1 à 2A3, 3A1 à 3A3 ; 102A1 à 102A3, 103A4 à 103A8) de diamètres extérieurs différents, un diamètre extérieur d'une section intermédiaire de tiroir de soupape (2A2, 3A2 ; 102A2, 103A4, 103A7) qui est agencée dans la direction axiale entre deux sections extérieures de tiroir de soupape (2A1 et 2A3 ou 3A1 et 3A3 ; 102A1 et 102A3, 103A5 et 103A8, 103A8 et 103A6) étant respectivement au moins inférieur au diamètre extérieur de l'une des sections extérieures de tiroir de soupape (2A1, 2A3 ou 3A1, 3A3 ; 102A1, 102A3, 103A6, 103A8).

4. Système hydraulique selon la revendication 3, **caractérisé en ce que** le diamètre extérieur de l'une des sections extérieures de tiroir de soupape (2A3, 3A3 ; 102A3) est supérieur au diamètre extérieur de l'autre section extérieure de tiroir de soupape (2A1, 3A1 ; 102A3) d'au moins l'un des tiroirs de soupape (2A, 3A ; 102A) des soupapes de régulation de pression (2, 3 ; 102), la pression (p_A) dans la conduite de pression de travail (4 ; 104) étant appliquée sur la surface différentielle entre des surfaces de commande (2A1F, 2A3F, 3A1F, 3A3F ; 102A1F, 102A3F) tournées les unes vers les autres de l'un des tiroirs de soupape (2A, 3A ; 102A), qui sont respectivement délimitées par les diamètres extérieurs des sections extérieures de tiroir de soupape (2A1, 2A3 ou 3A1, 3A3 ; 102A1, 102A3) et le diamètre extérieur de la section intermédiaire de tiroir de soupape (2A2, 3A2 ; 102A2), et agissant sur le tiroir de soupape (2A, 3A ; 102A) dans une direction d'actionnement du tiroir de soupape (2A, 3A ; 102A), ce qui provoque une réduction d'un débit volumique provenant de la poche de soupape haute pression (2B1, 3B1 ; 102B1) en direction de la poche de soupape de pression de travail (2B2, 3B2 ; 102B2) et une augmentation du débit volumique provenant de la poche de soupape de pression de travail (2B2, 3B2 ; 102B2) en direction de la poche de soupape basse pression (2B3, 3B3 ; 102B3).

5. Système hydraulique selon la revendication 3, **caractérisé en ce que** la pression dans la conduite de pression de travail (104) est appliquée sur une surface de commande (103A8F) de l'un des tiroirs de soupape (103A), qui est délimitée par le diamètre extérieur de la section extérieure de tiroir de soupape (103A8), dont le diamètre extérieur est supérieur au diamètre extérieur de l'autre section extérieure de tiroir de soupape (103A7), et le diamètre extérieur de l'autre section de tiroir de tiroir de soupape (103A7), et agit sur le tiroir de soupape (103A) dans une direction d'actionnement du tiroir de soupape (103A), ce qui provoque une réduction d'un débit volumique provenant de la poche de soupape haute pression (103B1) en direction de la poche de soupape de pression de travail (103B2) et une augmentation du débit volumique provenant de la poche de soupape de pression de travail (103B2) en direction de la poche de soupape basse pression (103B3).

6. Système hydraulique selon l'une quelconque des revendications précédentes, **caractérisé en ce que**, sur des poches de soupape de pression pilote (2B4, 3B4 ; 102B4, 103B4) des soupapes de régulation de pression (2, 3 ; 102, 103), une pression pilote (p_EDS) peut être appliquée respectivement sur des surfaces de commande (8, 9 ; 108 ; 109) des tiroirs de soupape (2A, 3A ; 102A, 103A) des soupapes de régulation de pression (2, 3 ; 102, 103), laquelle agit sur les tiroirs de soupape (2A, 3A ; 102A, 103A) respectivement dans des directions d'actionnement des tiroirs de soupape (2A, 3A ; 102A, 103A), ce qui provoque une augmentation du débit volumique provenant des poches de soupape haute pression (2B1, 3B1 ; 102B1, 103B1) en direction des poches de soupape de pression de travail (2B2, 3B2 ; 102B2, 103B2) et une réduction des débits volumiques provenant des poches de soupape de pression de travail (2B2, 3B2 ; 102B2, 103B2) en direction des poches de soupape basse pression (2B3, 3B3 ; 102B3, 103B3).

7. Système hydraulique selon l'une quelconque des revendications précédentes, **caractérisé en ce que** les soupapes de régulation de pression (2, 3 ; 102, 103) comprennent chacune une unité de ressort (10, 11 ; 1010, 1011) dont les forces de ressort agissent respectivement sur les tiroirs de soupape (2A, 3A ; 102A, 103A) dans des directions d'actionnement des tiroirs de soupape (2A, 3A); 102A, 103A), ce qui provoque une réduction de débits volumiques provenant des poches de soupape de pression de travail (2B2, 3B2 ; 102B2, 103B2) en direction des poches de soupape basse pression (2B3, 3B3 ; 102B3, 103B3).

8. Système hydraulique selon l'une quelconque des revendications précédentes, **caractérisé en ce que** les poches de soupape de pression de travail (2B3, 3B3 ; 102B3, 103B2) des soupapes de régulation de pression (2, 3 ; 102, 103) sont réalisées dans les boîtiers de soupape (2B, 3B ; 102B, 103B) et leurs diamètres intérieurs sont supérieurs aux diamètres extérieurs des tiroirs de soupape (2A, 3A ; 102A, 103A).

9. Système hydraulique selon l'une quelconque des revendications précédentes, **caractérisé en ce que** la poche de soupape haute pression (2B1, 3B1 ; 102B1) et la poche de soupape basse pression (2B3, 3B3 ; 102B3) sont prévues par au moins l'une des deux soupapes de régulation de pression (2, 3 ; 102) dans le boîtier de soupape (2B, 3B ; 102B) de la soupape de régulation de pression (2, 3 ; 102), dont les diamètres intérieurs sont respectivement supérieurs aux diamètres extérieurs du tiroir de soupape (2A, 3A ; 102A).

10. Système hydraulique selon l'une quelconque des revendications précédentes, **caractérisé en ce que** la poche de soupape basse pression (103B3) et la poche de soupape haute pression (103B1) d'au moins l'une des soupapes de régulation de pression (103) sont formées respectivement par des sections de poche de tiroir de soupape (103A4, 103A5) dont les diamètres extérieurs sont respectivement inférieurs aux diamètres intérieurs de sections de guidage de boîtier de soupape axiales (103B5, 103B6), dans les zones desquelles le tiroir de soupape (103A) est guidé de manière mobile longitudinalement par l'intermédiaire de sections de guidage de tiroir de soupape (103A6, 103A7, 103A8), les diamètres extérieurs des sections de guidage de tiroir de soupape (103A6, 103A7, 103A8) étant respectivement supérieurs aux diamètres extérieurs des sections de poche de tiroir de soupape (103A4, 103A5) et correspondant au moins approximativement aux diamètres intérieurs des sections de guidage de boîtier de soupape (103B5, 103B6).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006030455 A1

- US 2020361448 A1